(19) Europäisches Patentamt
European Patent Office
Office européen des brevets

(11) **EP 2 922 887 B1**

(12) **EUROPÄISCHE PATENTSCHRIFT**

(45) Veröffentlichungstag und Bekanntmachung des Hinweises auf die Patenterteilung:
**11.03.2020  Patentblatt 2020/11**

(21) Anmeldenummer: **13795448.3**

(22) Anmeldetag: **18.11.2013**

(51) Int Cl.:
*C08G 18/18* (2006.01)    *C08G 18/40* (2006.01)
*C08G 18/63* (2006.01)    *C08G 18/76* (2006.01)
*B29C 44/04* (2006.01)    *C08G 18/48* (2006.01)
*C08G 101/00* (2006.01)   *B29L 31/58* (2006.01)
*B32B 5/32* (2006.01)     *B29K 75/00* (2006.01)
*C08J 9/00* (2006.01)     *B32B 7/02* (2019.01)

(86) Internationale Anmeldenummer:
**PCT/EP2013/074013**

(87) Internationale Veröffentlichungsnummer:
**WO 2014/079788 (30.05.2014 Gazette 2014/22)**

(54) **VERFAHREN ZUR HERSTELLUNG VON PUR-WEICHFORMSCHAUMSTOFFEN**

PROCESS FOR THE PREPARATION OF PUR FLEXIBLE FOAMS

PROCÉDÉ DE PRODUCTION DE MOUSSES SOUPLES DE PUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.11.2012  EP 12193978**

(43) Veröffentlichungstag der Anmeldung:
**30.09.2015  Patentblatt 2015/40**

(73) Patentinhaber: **Covestro Deutschland AG**
**51373 Leverkusen (DE)**

(72) Erfinder:
• **HAHN, Norbert**
  **41569 Rommerskirchen (DE)**
• **MEYER-AHRENS, Sven**
  **51375 Leverkusen (DE)**
• **JACOBS, Gundolf**
  **51503 Rösrath (DE)**
• **LOEHR, Dirk**
  **50259 Pulheim (DE)**
• **CZYLWIK, Dietmar**
  **42799 Leichlingen (DE)**

(74) Vertreter: **Levpat**
**c/o Covestro AG**
**Gebäude 4825**
**51365 Leverkusen (DE)**

(56) Entgegenhaltungen:
**EP-A1- 0 370 750    DE-A1- 10 016 350**
**US-B1- 6 419 863**

**Beschreibung**

Die Erfindung betrifft ein Verfahren zur Herstellung von Polyurethanweichformschaumstoffen (PUR-Weichformschaumstoffe) mit horizontal angeordneten Zonen unterschiedlicher Härte welches so durchgeführt wird, dass mindestens zwei Schaumstoffe unterschiedlicher Härte bildende, fließfähige Reaktionsgemische nacheinander in horizontaler Anordnung schichtartig in den Formhohlraum eingebracht werden, wobei mindestens ein fließfähiges Reaktionsgemisch frei geschäumt wird, bevor mindestens ein weiteres schaumbildendes fließfähiges Reaktionsgemisch in den Formhohlraum eingebracht wird.

DE-A 10016350 offenbart ein Zweizonenschaumteil sowie ein Verfahren zur Herstellung eines Zweizonenschaumteils. Zwischen dem ersten (Weichschaum) und dem zweiten (Hartschaum) Bereich des Schaumteils ist vorzugsweise in einer horizontalen Ebene ein Netzwerk aus Polyethylen, Jute, Gaze, Vlies oder dergleichen angeordnet ist. Die beiden Bereiche werden durch das Netzwerk getrennt und die Form des Netzwerk bestimmt den zweiten Bereich. Die Trennung zwischen Weich- und Hartschaum kann im mittleren Bereich eines Sitzpolsters erfolgen aber auch sowohl im mittleren als auch im Seitenbereich erfolgen. Nachteilig bei diesem Verfahren ist die Verwendung einer Trennschicht zwischen den unterschiedlichen Zonen, die Reproduzierbarkeit ist verbesserungswürdig.

US-B 6,787,078 offenbart ein Verfahren zur Herstellung von Mehrzonenschaumteilen, in dem eine erste elastomeren-bildende Formulierung in eine Form gegeben wird, anschließend ein Release Agent (Trennmittel) auf diese elastomere Schicht aufgetragen wird und dann eine zweite schaumbildende Formulierung in die Form gegeben wird und nach vollständiger Aushärtung das Formteil aus der Form genommen wird. Die obere Elastomeren Schicht ist nur an den gewünschten Stellen mit der unteren Schaumschicht verbunden, an denen keine Release Agent aufgetragen wurde. Nachteilig bei diesem Verfahren ist, dass das Release Agent an den richtigen Positionen aufgetragen werden muss Bei der elastomeren bildenden Schicht handelt es sich um eine Beschichtung zur Erzielung besonderer haptischer Eigenschaften, z.B. einer Kunstlederoberfläche. Außerdem erfüllt die elastomere Schicht nicht die Anforderungen an Komfort im Sitzbereich, da sie nicht weichelastisch wie ein Schaumstoff ist.

EP-A 342352 offenbart ein Verfahren zur Herstellung von Schaumstoffpolstern mit Zonen unterschiedlicher Härte durch Formverschäumung, in dem mindestens zwei Schaumstoffe unterschiedlicher Härte bildende fließfähige Reaktionsgemische nacheinander in den Formhohlraum eingebracht werden, wobei das zweite Reaktionsgemisch beim Einbringen bereits angecremt ist, und das Schaumstoffpolster nach dem Aushärten entformt wird. Das erste noch flüssige Reaktionsgemisch wird über ein mit Löchern versehenes Flächengebilde aufgebracht. So können zwei Zonen unterschiedlicher Härte übereinander, also horizontal, angeordnet werden. Nachteilig bei diesem Verfahren ist zum einen das Einbringen des mit Löchern versehenen Flächengebildes als auch das Einbringen des angecremten zweiten Reaktionsgemischs. Die Reproduzierbarkeit ist verbesserungswürdig.

EP-A 0370750 offenbart wassergeblähten geformten Polyurethan-Weichschaum für Autositze, der zwei Schichten von unterschiedlicher Härte aufweist. Sowohl die erste Polyurethan-Weichschaumformulierung als auch die zweite Polyurethan-Weichschaumformulierung werden bei geschlossenem Formteil geschäumt. Nachteilig bei diesem Verfahren ist die schlechte Reproduzierbarkeit der resultierenden Formteile im Produktionsmaßstab.

US-B 6419863 offenbart Polyurethan-Weich-Formschaum für Autositze, der zwei horizontale Schichten von unterschiedlicher Härte aufweist. Die erste Schicht wird als Sprühschaum in die Form eingebracht und frei geschäumt, die zweite Schaum-Formulierung wird in das Formteil eingebracht und bei geschlossenem Formteil geschäumt. Nachteilig bei diesem Verfahren ist der hohe Zeitaufwand im Produktionsmaßstab, da der Sprühschaum in mehrere Schichten schnell übereinander aufgesprüht werden muss.

Die bislang bekannten Verfahren zur Herstellung von Polyurethanweichformschaumstoffen mit horizontal angeordneten Zonen unterschiedlicher Härte verwenden spezielle Trennschichten zur Herstellung der horizontal angeordneten Zonen unterschiedlicher Härte in den Formteilen. In der Praxis sind diese Verfahren jedoch schwer reproduzierbar, was sich nachteilig insbesondere in der Serienproduktion auswirkt. Daher können gewünschte Eigenschaften wie beispielsweise Seitenführungskräfte beispielsweise bei Polstersitzen oder besonders weiche Sitzbereiche nicht zum Tragen kommen.

Daher besteht die Aufgabe das Verfahren zur Herstellung von Polyurethanweichformschaumstoffen mit horizontal angeordneten Zonen unterschiedlicher Härte hinsichtlich ihrer Reproduzierbarkeit der exakten Lage und Ausdehnung der einzelnen Zonen im fertigen Weichformschaum zu verbessern und auch die Eigenschaften der einzelnen Zonen zu verbessern.

Diese Aufgabe wurde gelöst, in dem das Verfahren zur Herstellung von Polyurethanweichformschaumstoffen (PUR-Weichformschaumstoffe) mit horizontal angeordneten Zonen unterschiedlicher Härte so durchgeführt wird, dass mindestens zwei Schaumstoffe unterschiedlicher Härte bildende, fließfähige Reaktionsgemische nacheinander in horizontaler Anordnung schichtartig in den Formhohlraum eingebracht werden, wobei mindestens ein fließfähiges Reaktionsgemisch frei geschäumt wird, bevor mindestens ein weiteres schaumbildendes fließfähiges Reaktionsgemisch in den Formhohlraum eingebracht wird.

Frei geschäumt bedeutet, dass eine Expansion des schaumbildenden Reaktionsgemischs gegen den Umgebungsdruck ohne mechanische Restriktion in Aufstiegsrichtung erfolgen kann.

PUR-Weichformschaumstoffe mit horizontal angeordneten Zonen unterschiedlicher Härte bedeutet eine Anordnung der unterschiedlichen Schichten im Wesentlichen parallel zum Sitz oder Lehnenspiegel bzw. parallel zur Draufsicht auf den Schaum.

Gegenstand der vorliegenden Erfindung ist daher ein Verfahren zur Herstellung von Polyurethanweichformschaumstoffen mit horizontal angeordneten Zonen unterschiedlicher Härte dadurch gekennzeichnet, dass in Schritt

1) ein fließfähiges Reaktionsgemisch I in den Formhohlkörper eingebracht und frei geschäumt wird,
2) nach 1 bis 6 min, bevorzugt 2 bis 5 min, besonders bevorzugt 3 bis 4 min nach Einbringen des Reaktionsgemisch I in den Formhohlkörper mindestens ein fließfähiges Reaktionsgemisch II in den Formhohlkörper eingebracht wird,
3) Aushärtung in der Form und
4) Entformen des nach Schritt 4 gebildeten PUR-Weichformschaumstoffs,

wobei das fließfähige Reaktionsgemisch I einen PUR-Weichschaumstoff mit einer Rohdichte von 30 bis 90 kg/m$^3$, vorzugsweise 40 bis 85 kg/m$^3$ ausbildet und das fließfähige Reaktionsgemisch II einen PUR-Weichformschaumstoff mit einer Rohdichte von 30 bis 85 kg/m$^3$, vorzugsweise 40 bis 80 kg/m$^3$ ausbildet.

In Schritt 2) können je nach Anforderung an den herzustellenden Formschaumkörper auch mehrere Reaktionsgemische II, beispielsweise II.1, II.2, II.3, II.4 usw. nacheinander in den Formhohlkörper eingebracht werden, wobei sich die Reaktionsgemische II.1, II.2, II.3, II.4 usw. lediglich in ihrer Stauchhärte nach Ausbildung des PUR-Weichformschaumstoffes unterscheiden. Die unterschiedlichen Stauchhärten der Reaktionsgemische II werden durch unterschiedliche Isocyanat-Indices der Reaktionsgemische II.1, II.2, II.3, II.4 usw. erreicht und/oder durch Variation in der Polyolformulierung. Mindestens eines der Reaktionsgemische II.1, II.2, II.3, II.4 usw. ist in einer horizontalen Anordnung zu dem in Schritt 1) frei geschäumten PUR-Weichschaumes angeordnet.

Weiterer Gegenstand der vorliegenden Erfindung sind auch die nach dem erfindungsgemäßen Verfahren hergestellten PUR-Weichformschaumstoffe und deren Verwendung zur Herstellung von Formteilen sowie die Formteile selbst.

Die Komponenten der Reaktionsgemische I und II in den Schritten 1 und 2 des erfindungsgemäßen Verfahrens werden nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der EP-A 355 000 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1993, z.B. auf den Seiten 139 bis 265, beschrieben. Die Mischung der Komponenten der Reaktionsgemische I bzw. II initiiert die Polymerisation und das Aufschäumen des polymerisierenden Materials. Polymerisation und Formgebung erfolgen oft in einem Schritt, typischerweise durch Formgebung oder Sprühen der noch im flüssigen Zustand befindlichen Reaktionsmischung. Die Formschaumstoffe können heiß- oder auch kalthärtend hergestellt werden.

Bei den oben genannten Komponenten der Reaktionsgemische I bzw. II handelt es sich auf der einen Seite um eine polyfunktionelle organische Isocyanatkomponente (welche auch oft als "B-Komponente" bezeichnet wird) und auf der anderen Seite um polyfunktionelle Monomere oder Harze, welche Isocyanaten gegenüber eine entsprechende Reaktivität aufweisen und gegebenenfalls weitere Hilfsstoffe enthalten können. Dieses Gemisch, welches vielfach als "A-Komponente" bezeichnet wird, umfasst typischerweise zum größten Teil eine oder mehrere Polyolkomponenten.

Um nun einen PUR-Weichformschaumstoff bestimmter Zusammensetzung zu erhalten, werden die oben beschriebenen Komponenten vor ihrer Vermischung entsprechend dosiert. Ein Aufschäumen wird dabei normalerweise so erreicht, dass der A-Komponente Wasser zugesetzt wird, welches mit dem Polyisocyanat der B-Komponente unter Bildung eines Amins und unter Freisetzung von $CO_2$ reagiert, welches wiederum als Treibgas fungiert. Alternativ oder zusätzlich zu der Verwendung von Wasser werden oft auch flüchtige inerte organische Verbindungen oder inerte Gase verwendet.

Die im erfindungsgemäßen Verfahren eingesetzten Formhohlkörper geben die Struktur des gewünschten Formschaumkörpers wieder. Die nach dem erfindungsgemäßen Verfahren erhältlichen PUR-Schaumstoffe finden beispielsweise Anwendung für Möbelpolsterungen, Textileinlagen, Matratzen, Automobilsitze, Kopfstützen, Armlehnen, Schwämmen und Bauelementen, sowie Sitz- und Armarturverkleidungen, vorzugsweise für Möbelpolsterungen, Textileinlagen, Matratzen, Automobilsitze und Kopfstützen.

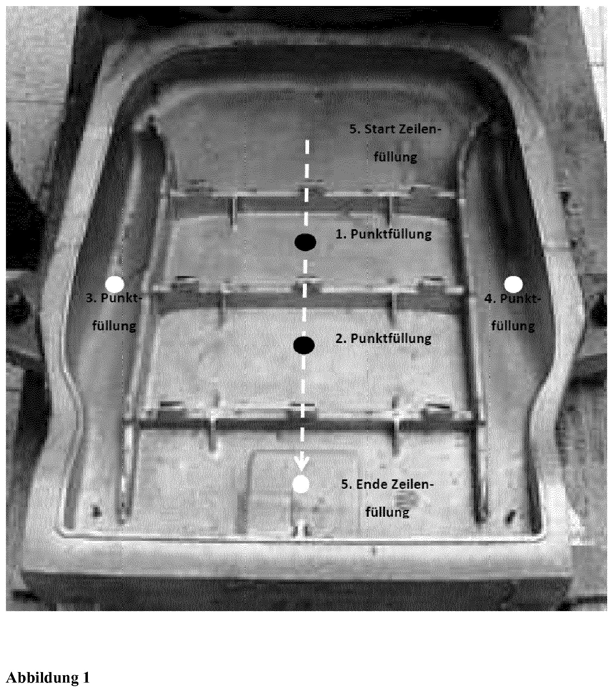

Die einzusetzenden Formhohlkörper können durch Stege abgetrennte Bereiche aufweisen, die es ermöglichen unterschiedliche fließfähige Reaktionsgemische in den Formhohlkörper einzubringen. Vorzugsweise weisen die im erfindungsgemäßen Verfahren eingesetzten Formhohlkörper durch Stege abgetrennte Bereiche auf (Abbildung 1), um im herzustellenden Formhohlkörper Bereiche unterschiedlicher Härte an vorbestimmten Positionen zu erhalten. Abbildung 1 zeigt einen Formhohlkörper, der eine Sitzfläche für beispielsweise einen Autositz, darstellt. Die Bodenfläche des Formhohlkörpers stellt nach erfolgter Formschaumherstellung die Oberfläche des resultierenden Sitzes dar. So kann beispielsweise gemäß Abbildung 1 im mittleren Bereich (1. und 2. Punktfüllung) ein Reaktionsgemisch I eingebracht werden, welches einen weichen Schaumstoff ausbildet, in den Seitenbereichen (3. und 4. Punktfüllung) ein Reaktionsgemisch II.1, welches einen harten Schaumstoff ausbildet, und somit eine gute Sitzführung ermöglicht und in den äußeren Zonen der Sitzfläche (5. Zeilenfüllung) ein weiteres Reaktionsgemisch II.2 eingebracht werden, welches einen härteren Schaumstoff als in der mittleren Sitzfläche und einen weicheren Schaumstoff als in den Seitenteilen ausbildet.

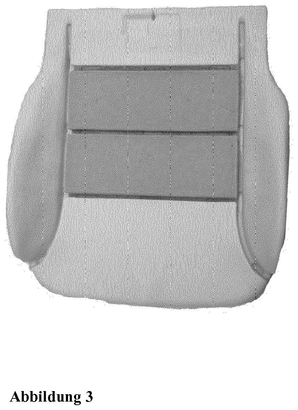

Im erfindungsgemäßen Verfahren wird im ersten Schritt nach den dem Fachmann bekannten Methoden ein fließfähiges Reaktionsgemisch I an die gewünschte Position in dem Formhohlkörper eingebracht, das dann frei geschäumt wird. Vorzugsweise werden die Ausgangskomponenten des Reaktionsgemischs I im Einstufenverfahren verarbeitet und an die gewünschte Position in die Form eingebracht. So kann beispielsweise gemäß Abbildung 1 das Reaktionsgemisch I im mittleren Bereich (1. und 2. Punktfüllung) eingefüllt werden und frei geschäumt werden. Dieser Bereich bildet im Endprodukt die mittlere Sitzfläche des Formschaumkörpers (Abbildung 3) aus.

Das fließfähige Reaktionsgemisch I enthält die Komponenten

Komponente I-A1

I-A1.1 mindestens ein Polyetherpolyol mit einer Funktionalität von 2 bis 8, vorzugsweise von 2 bis 6, besonders bevorzugt von 2 bis 4, einer OH-Zahl gemäß DIN 53240 in einem Bereich von 20 bis 70 mg KOH/g und einem Propyloxypropylen (PO)-Gehalt in einer Menge von 50 bis 100 Gew.-% und einen Polyoxyethylen (EO)-Gehalt in einer Menge von 0 bis 50 Gew.-%,

I-A.1.2 gegebenenfalls mindestens ein Polyetherpolyol mit einer Hydroxyl-Funktionalität von 2 bis 8, vorzugsweise von 2 bis 6, besonders bevorzugt von 2, einer Hydroxyl (OH)-Zahl gemäß DIN 53240 in einem Bereich von 50 bis 65 mg KOH/g und einem PO-Gehalt in einer Menge von 45 bis 55 Gew.-% und einen EO-Gehalt in einer Menge von 45 bis 55 Gew.-%;

I-A1.3 gegebenenfalls mindestens eine Dispersion eines Polymers in einem Polyetherpolyol, wobei die OH-Zahl gemäß DIN 53240 der Dispersion in einem Bereich von 10 bis 30 mg KOH/g liegt und wobei das Polyetherpolyol eine Hydroxyl-Funktionalität 2 bis 6, vorzugsweise von 2 bis 4, besonders bevorzugt von 3, einen PO-Gehalt in einer Menge von 70 bis 90 Gew.-% und einen EO-Gehalt in einer Menge von 10 bis 30 Gew.-% aufweist;

I-A1.4 gegebenenfalls mindestens ein Polyetherpolyol mit einer Funktionalität von 2 bis 8, vorzugsweise von 2 bis 6, besonders bevorzugt von 3, einer OH-Zahl in einem Bereich von 220 bis 290 mg KOH/g und einen PO-Gehalt in einer Menge von bis zu 25 Gew.-% und einen EO-Gehalt in einer Menge von mindestens 75 Gew.-%;

A2 Wasser und/oder physikalisches Treibmittel,

A3 gegebenenfalls gegenüber Isocyanaten reaktionsfähige Wasserstoffatome aufweisende Verbindungen mit einer OH-Zahl von 140 mg KOH/g bis 900 mg KOH/g,

A4 Hilfs- und Zusatzstoffe wie

    a) Katalysatoren,
    b) oberflächenaktive Zusatzstoffe,
    c) Pigmente oder Flammschutzmittel, und

Komponente B:

Di- und/oder Polyisocyanate, vorzugsweise aromatische Polyisocyanate,
wobei die Herstellung bei einer Kennzahl von 70 bis 130, bevorzugt von 80 bis 115, besonders bevorzugt von 85 bis 95 erfolgt.

Bevorzugt liegen die Massenanteile der Komponenten I-A1.1 bis I-A1.4 (gegebenenfalls unabhängig voneinander) in den folgenden Mengen: I-A1.1 von 10 bis 100 Gew.-Teile; I-A1.2 von 0 bis 70 Gew.-Teile; I-A1.3 von 0 bis 40 Gew.-Teile und I-A1.4 von 0 bis 25 Gew.-Teile. Die Summe der Massenanteile der Komponenten I-A1.1 bis I-A1.4 ergibt 100.

Die Massenanteile der Komponenten A2 bis A4 liegen bevorzugt in den folgenden Mengen: A2 von 0,5 bis 25 Gew.-Teile, bevorzugt 2 bis 5 Gew.-Teile; A3 von 0 bis 10 Gew.-Teile, bevorzugt 0 bis 5 Gew.-Teile und A4 von 0,05 bis 10 Gew.-Teile, bevorzugt 0,2 bis 5 Gew.-Teile wobei die Gew.-Teile der Komponenten A2 bis A4 auf die Summe der Komponente I-A1 bezogen sind.

In einer Ausführungsform des erfindungsgemäßen Verfahrens wird ein fließfähiges Reaktionsgemisch I eingesetzt, das einen viskoelastischen Schaum mit einer Rohdichte gemäß DIN EN ISO 3386-1-98 von 30 bis 90 kg/m$^3$, vorzugsweise 40 bis 85 kg/m$^3$ sowie einer Stauchhärte gemäß DIN EN ISO 3386-1-98 von 2,0 bis 4,0 kPa, vorzugsweise von 2,3 bis 3,5 kPa ausbildet. Besonders bevorzugt ist die Verwendung eines viskoelastischen Schaumstoffes mit geringer Abhängigkeit der mechanischen Eigenschaften (z.B. Härte, Hysterese) von der Temperatur.

Viskoelastische Schaumstoffe zeichnen sich durch eine langsame, graduelle Rückverformung nach einer erfolgten Kompression, aus. Dies äußert sich z.B. in einer hohen Hysterese (> 20 %; in Druck-Spannungskurven bei der Bestimmung der Eindruckhärte nach DIN EN ISO 2439 oder der Stauchhärte nach DIN EN ISO 3386-1-98) oder in einer geringen Kugelrückprallelastizität (< 15 %; Bestimmung nach DIN EN ISO 8307).

In einer Ausführungsform des erfindungsgemäßen Verfahrens wird im fließfähigen Reaktionsgemisch I Komponente I-A1.1 in einer Menge von 10 bis 40 Gew.-Teilen, Komponente I-A1.2 in einer Menge von 30 bis 70 Gew.-Teilen, Komponente I-A1.3 in einer Menge von 5 bis 40 Gew.-Teile und Komponente I-A1.4 in einer Menge von 5 bis 25 Gew.-Teilen, wobei die Summe der Massenanteile der Komponenten I-A1.1 bis I-A1.4 100 ergibt, eingesetzt. Diese Gewichtsanteile sind dabei insofern bevorzugt, als sie eine besonders geringe Temperaturabhängigkeit der physikalischen Eigenschaften im erfindungsgemäßen Polyurethanschaum zur Folge haben.

Die Kennzahl (Isocyanat Index) gibt das Verhältnis der tatsächlich eingesetzten Isocyanat-Menge zur stöchiometrischen, d.h. berechneten Isocyanat (NCO)-Menge an:

$$\text{Kennzahl} = [(\text{Isocyanat-Menge eingesetzt}) : (\text{Isocyanat-Menge berechnet})] \bullet 100 \qquad (I)$$

Gemäß des erfindungsgemäßen Verfahrens wird das in Schritt 1 in den Formhohlkörper eingebrachte Reaktionsgemisch I als Freischaum bei geschlossenem oder geöffnetem Formhohlkörper geschäumt.

Nach einer Zeit von 1 bis 6 min, bevorzugt 2 bis 5 min, besonders bevorzugt 3 bis 4 min, gerechnet ab dem Zeitpunkt der Einbringung des Reaktionsgemischs I, ist die Oberfläche des gebildeten Schaums noch klebrig und das fließfähige Reaktionsgemisch II wird gemäß Schritt 2 in die Form eingebracht. Das fließfähige Reaktionsgemisch II wird so in den Formhohlkörper eingebracht, dass es einen Formschaumstoff ausbildet, der horizontal in Bezug auf das bereits geschäumte Reaktionsgemisch I angeordnet ist. Die resultierenden Formschaumkörper weisen Formkörper mit zwei horizontal (also parallel) angeordnete Zonen unterschiedlicher Härte aus, so genannte "Horizontal Dual Hardness" Formkörper aus.

Das fließfähige Reaktionsgemisch II bildet einen Formschaumstoff mit einer Rohdichte gemäß DIN EN ISO 3386-1-98 von 30 bis 85 kg/m$^3$, vorzugsweise 40 bis 80 kg/m$^3$, sowie einer Stauchhärte gemäß DIN EN ISO 3386-1-98 von 3,0 bis 14,0 kPa, vorzugsweise von 3,5 bis 12,0 kPa aus.

In einer Ausführungsform des erfindungsgemäßen Verfahrens wird ein Formschaumstoff mit drei angeordneten Zonen unterschiedlicher Härte hergestellt, sogenannte "Triple Hardness" Formkörper. Hierzu wird in Schritt 2 des erfindungsgemäßen Verfahrens nach 1 bis 6 min, bevorzugt 2 bis 5 min, besonders bevorzugt 3 bis 4 min, gerechnet nach Einbringen des Reaktionsgemischs I, erst ein fließfähiges Reaktionsgemisch II.1 (Schritt 2a) und direkt im Anschluss das Reaktionsgemisch II.2 (Schritt 2b) in den Formhohlkörper eingebracht, wobei die Reaktionsgemische II.1 und II.2 Formschaumstoffe unterschiedlicher Härte ausbilden und wobei das Reaktionsgemisch II.2 horizontal (parallel) zu I angeordnet ist.

In dieser Ausführungsform bildet das fließfähige Reaktionsgemisch II.1, das einen Formschaumstoff mit einer Rohdichte gemäß DIN EN ISO 3386-1-98 von 30 bis 85 kg/m$^3$, vorzugsweise 40 bis 80 kg/m$^3$ und einer Stauchhärte gemäß DIN EN ISO 3386-1-98 von 6,0 bis 14,0 kPa, vorzugsweise von 8,0 bis 12,0 kPa aus, und wird an der gewünschten Position im Formhohlkörper eingebracht, beispielsweise in den Seitenbereichen gemäß Abbildung 1 (3. und 4. Punktfüllung).

Das fließfähige Reaktionsgemisch II.2 wird direkt im Anschluss nach dem Einbringen des fließfähigen Reaktionsgemischs II.1, an die gewünschte Position im Formhohlkörper eingebracht, beispielsweise in den vorderen und hinteren Sitzbereich der Abbildung 1 (5. Zeilenfüllung), das einen Schaum ausbildet, der sich in horizontaler Anordnung relativ zu dem resultierenden Schaum des Reaktionsgemischs I ausbildet. Vorzugsweise bildet das fließfähige Reaktionsgemisch II.2 einen Formschaumstoff mit einer Rohdichte gemäß DIN EN ISO 3386-1-98 von 30 bis 85 kg/m$^3$, vorzugsweise 40 bis 80 kg/m$^3$ sowie einer Stauchhärte gemäß DIN EN ISO 3386-1-98 von 3,0 bis 9,0 kPa, vorzugsweise von 3,5 bis 8,0 kPa aus.

Die Reaktionsgemische II.1 und II.2, die in Schritt 2 in den Formhohlkörper eingebracht werden unterscheiden sich lediglich in ihrer Stauchhärte, die durch die Kennzahl und/oder in der chemischen Zusammensetzung eingestellt wird.

Vorzugsweise enthält das fließfähige Reaktionsgemisch II die Komponenten

Komponente II-A1

II-A1.1 mindestens einem Polyetherpolyol mit einer Funktionalität von 2 bis 8, vorzugsweise von 2 bis 6, besonders bevorzugt von 3 bis 4, einem Polyoxyethylen (EO)-Gehalt von 0 bis 30 Gew.-%, bevorzugt von 0 bis 20 Gew.-%, einer OH-Zahl gemäß DIN 53240 von ≥10 mg KOH/g bis ≤ 112 mg KOH/g, bevorzugt von ≥20 mg KOH/g bis ≤ 40 mg KOH/g,
II-A1.2 gegebenenfalls mindestens einem Polyetherpolyol mit einer Funktionalität von 2 bis 8, vorzugsweise von 2 bis 6, besonders bevorzugt von 3, einem Polyoxyethylen (EO)-Gehalt von > 60 Gew.-%, bevorzugt > 70 Gew.-%, einer OH-Zahl gemäß DIN 53240 von ≥10 mg KOH/g bis ≤ 112 mg KOH/g, bevorzugt von ≥20 mg KOH/g bis ≤ 50 mg KOH/g,

II-A1.3 gegebenenfalls mindestens eine Dispersion eines Polymers in einem Polyetherpolyol, wobei die OH-Zahl gemäß DIN 53240 der Dispersion in einem Bereich von 10 bis 60 mg KOH/g liegt und wobei das Polyetherpolyol eine Hydroxyl-Funktionalität 2 bis 6, vorzugsweise von 2 bis 4, besonders bevorzugt von 3, einen Polyoxypropylen (PO)-Gehalt in einer Menge von 70 bis 90 Gew.-% und einen EO-Gehalt in einer Menge von 10 bis 30 Gew.-% aufweist;

A2 Wasser und/oder physikalischen Treibmitteln,

A3 gegebenenfalls gegenüber Isocyanaten reaktionsfähigen Wasserstoffatomen aufweisenden Verbindungen mit einer OH-Zahl von 140 mg KOH/g bis 900 mg KOH/g,

A4 Hilfs- und Zusatzstoffen wie

    a) Katalysatoren,
    b) oberflächenaktive Zusatzstoffe,
    c) Pigmente oder Flammschutzmittel, und

B Di- oder Polyisocyanaten, vorzugsweise aromatische Polyisocyanate, wobei die Herstellung des Polyurethan-Weichschaumes bei einer Kennzahl von 75 bis 120 erfolgt.

Die Massenanteile der Komponenten II-A1.1 bis II-A1.3 (gegebenenfalls unabhängig voneinander) können in den folgenden Mengen liegen: II-A1.1 von 10 bis 100 Gew.-Teile; II-A1.2 von 0 bis 10 Gew.-Teile; II-A1.3 von 0 bis 90 Gew.- Teile, wobei die Gewichtsteile II-A1.1 bis II-A1.3 100 ergeben, A2 von 0,5 bis 25 Gew.-Teile, bevorzugt 2 bis 5 Gew.-Teile; A3 von 0 bis 10 Gew.-Teile, bevorzugt 0 bis 5 Gew.-Teile und A4 von 0,05 bis 10 Gew.-Teile, bevorzugt 0,2 bis 4 Gew.-Teile, wobei die Gew.-Teile der Komponenten A2 bis A4 auf die Summe der Komponente II-A1 bezogen sind.

In einer weiteren Ausführungsform des erfindungsgemäßen Verfahrens werden die fließfähigen Reaktionsgemische II.1 und II.2 eingesetzt. In dieser Ausführungsform liegen die Massenanteile der Komponenten in den folgenden Mengen: II-A1.1 von 90 bis 100 Gew.-Teile, II-A1.2 von 0 bis 10 Gew.-Teile, wobei die Gewichtsteile II-A1.1 bis II-A1.2 100 ergeben, A2 0,5 bis 25 Gew.-Teile, bevorzugt 2 bis 5 Gew.-Teile, A3 0 bis 10 Gew.-Teile, bevorzugt 0 bis 5 Gew.-Teile und A4 0,05 bis 10 Gew.-Teile, bevorzugt 0,2 bis 4 Gew.-Teile, wobei die Gew.-Teile der Komponenten A2 bis A4 auf die Summe der Komponente II-A1.1 bis II-A1.2 bezogen sind. In dieser Ausführungsform wird Reaktionsgemisch II.1 bei einer Kennzahl von 95 bis 120, vorzugsweise von 100 bis 115 geschäumt, wohingegen Reaktionsgemisch II.2 bei einer Kennzahl von 75 bis 95, bevorzugt von 80 bis 90 geschäumt wird. Vorzugsweise enthält in dieser Ausführungsform Komponente B ein oder mehrere aromatische Polyisocyanate, besonders bevorzugt solche Polyisocyanate auf Basis von Polyphenylpolymethylen (MDI).

Nach dem Einbringen der Reaktionsmischung II in Schritt 2, wobei in Schritt 2 auch mehrere Reaktionsmischungen II, wie beispielsweise II.1 und II.2 nacheinander in den Formhohlkörper eingebracht werden können, wird der Schaum in der Form ausgehärtet (Schritt 3). Nach einem Zeitraum von 3 bis 8 min, bevorzugt, 4 bis 6 min, gerechnet ab beendetem Einbringen der Reaktionsmischung in Schritt 2 wird das Formteil entformt (Schritt 4) und durch mechanisches Walken (Rollen- oder Vakuumcrasher) aufgedrückt.

Nachfolgend werden die einzelnen Komponenten, die in den Reaktionsgemischen I und II enthalten sind, näher beschrieben.

Komponente I-A1

Die Polyolkomponente I-A1 enthält die Komponenten I-A1.1 bis I-A1.4. Die Herstellung der Verbindungen der Polyolkomponenten I-A1.1 bis I-A1.4 erfolgt durch Addition von Alkylenoxiden an Starterverbindungen mit gegenüber Isocyanaten reaktionsfähigen Wasserstoffatomen. Diese Starterverbindungen weisen meist Funktionalitäten von 2 bis 8, vorzugsweise von 2 bis 6, besonders bevorzugt von 2 bis 4 auf und sind vorzugsweise hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3 Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte (Polyetherpolyole) Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Um diese Polyetherpolyole genauer zu spezifizieren, haben sich im Stand der Technik verschiedene Kenngrößen herauskristallisiert:

i.) Die Hydroxyl-Funktionalität, welche vom Starter-Molekül abhängt, auf dem aufbauend das Polyetherpolyol synthetisiert wird;

ii.) die Hydroxyl- oder OH-Zahl, welche ein Maß für den Gehalt an Hydroxylgruppen ist, und in mg KOH/g angegeben wird. Sie wird gemäß DIN 53240 bestimmt;

iii.) bei der Verwendung von Epoxiden, deren Ringöffnung die Ausbildung unterschiedlicher (d. h. primärer oder sekundärer) Hydroxylgruppen zur Folge hat, erfolgt zum einen die Angabe des Anteils der jeweiligen Epoxide im Polyetherpolyol, zum anderen aber auch die Angabe des Anteils primärer beziehungsweise sekundärer Hydroxylgruppen bezogen auf die Gesamtzahl der im Polyetherpolyol vorhandenen Hydroxylgruppen;

iv.) die Molekularmasse ($M_n$ oder $M_w$), welches ein Maß für die Länge der Polyoxyalkylen-Ketten der Polyetherpolyole ist.

Die oben genannten Größen können dabei über die folgende Gleichung in Bezug zueinander gesetzt werden: 56.100 = OH-Zahl • (Mw/Hydroxyl-Funktionalität).

In einer weiteren Ausführungsform können als Komponente I-A1 auch Polyethercarbonatpolyole eingesetzt werden, wie sie beispielsweise durch katalytische Umsetzung von Alkylenoxiden (Epoxiden) und Kohlendioxid in Anwesenheit von H-funktionellen Startersubstanzen erhältlich sind (siehe z.B. EP-A 2046861). Diese Polyethercarbonatpolyole haben im Allgemeinen eine Hydroxyl-Funktionalität von mindestens 1, bevorzugt von 2 bis 8, besonders bevorzugt von 2 bis 6 und ganz besonders bevorzugt von 2 bis 4. Die OH-Zahl beträgt bevorzugt von $\geq$ 3 mg KOH/g bis $\leq$ 140 mg KOH/g, besonders bevorzugt von $\geq$ 10 mg KOH/g bis $\leq$ 112 mg KOH/g.

Komponente I-A1.1 enthält mindestens ein Polyetherpolyol mit einer Funktionalität von 2 bis 8, vorzugsweise von 2 bis 6, besonders bevorzugt von 2 bis 4, einer OH-Zahl gemäß DIN 53240 in einem Bereich von 20 bis 70 mg KOH/g und einem Polyoxyethylen (PO)-Gehalt in einer Menge von 50 bis 100 Gew.-% und einen Ethylenoxid (EO)-Gehalt in einer Menge von 0 bis 50 Gew.-%. Vorzugsweise liegt der Anteil primärer Hydroxylgruppen in Komponente I-A1.1 in einem Bereich von 0 bis 3 % bezogen auf die Gesamtzahl primärer und sekundärer Hydroxylgruppen. Komponente I-A1.2 enthält mindestens ein Polyetherpolyol mit einer Hydroxyl-Funktionalität von 2 bis 8, vorzugsweise von 2 bis 6, besonders bevorzugt von 2, einer Hydroxyl (OH)-Zahl gemäß DIN 53240 in einem Bereich von 50 bis 65 mg KOH/g und einem PO-Gehalt in einer Menge von 45 bis 55 Gew.-% und einenEO-Gehalt in einer Menge von 45 bis 55 Gew.-%. Der Anteil primärer Hydroxylgruppen in I-A1.2 liegt vorzugsweise in einem Bereich von 40 bis 80%, besonders bevorzugt von 50 bis 70% bezogen auf die Gesamtzahl primärer und sekundärer Hydroxylgruppen in Komponente I-A1.2.

Komponente I-A1.3 der erfindungsgemäßen Polyetherpolyol-Zusammensetzung I-A1 stellt eine Dispersion eines Polymers dar. Solche Dispersionen sind bekannt als Polymer-modifizierte Polyole und umfassen Polymer-modifizierte Polyetherpolyole, bevorzugt Graft-Polyetherpolyole, insbesondere solche auf Styrol- und/oder Acrylnitril-Basis, welche vorteilhafterweise durch in-situ Polymerisation von Styrol, Acrylnitril oder bevorzugt von Mischungen von Styrol und Acrylnitril (beispielsweise in einem Gewichtsverhältnis von 90:10 zu 10:90, insbesondere von 70:30 zu 30:70) in den obengenannten Polyetherpolyolen erhalten werden (nach Verfahren, wie sie in den folgenden Patentschriften beschrieben sind: DE 11 11 394, DE 12 22 669, DE 11 52 536, DE 11 52 537, US 3,304,273, US 3,383,351, US 3,523,093, GB 1040452, GB 987618).

Ebenfalls versteht man unter oben genannten Dispersionen solche, welche durch Polyharnstoffdispersion, die durch Umsetzung von Diaminen und Diisocyanaten in Gegenwart einer Polyolkomponente erhalten werden (PHD-Dispersionen), und/oder Urethangruppen enthaltende Dispersionen, die durch Umsetzung von Alkanolaminen und Diisocyanaten in einer Polyolkomponente erhalten werden (PIPA-Polyole).

Die füllstoffhaltigen Polyetherpolyolen gemäß Komponente I-A1.3 (PHD-Dispersion) werden beispielsweise hergestellt durch in situ Polymerisation eines Isocyanats oder einer Isocyanat-Mischung mit einem Diamin und/oder Hydrazin in einem Polyol gemäß Komponente II-A1.2. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin. Verfahren zur Herstellung von PHD-Dispersionen sind beispielsweise beschrieben in US 4,089,835 und US 4,260,530.

Bei den füllstoffhaltigen Polyetherpolyolen gemäß Komponente I-A1.3 kann es sich auch um PIPA (Polyisocyanat-Polyaddition mit Alkanolaminen)-modifizierte Polyetherpolyole handeln, wobei das Polyetherpolyol eine Funktionalität von 2,5 bis 4 und ein Molekulargewicht von 500 bis 18000 aufweist.

Komponente I-A1.3 weist eine OH-Zahl von 10 bis 30 mg KOH/g, eine Hydroxylfunktionalität von 2 bis 6, bevorzugt 2 bis 4, besonders bevorzugt 3, einen PO-Gehalt in einer Menge von 70 bis 90 Gew.-% und einen EO-Gehalt in einer Menge von 10 bis 30 Gew.-% auf. Der Anteil primärer Hydroxylgruppen in I-A1.3 liegt vorzugsweise in einem Bereich von 40 bis 95%, besonders bevorzugt von 50 bis 90% bezogen auf die Gesamtzahl primärer und sekundärer Hydroxylgruppen in Komponente I-A1.3.

Komponente I-A1.4 enthält mindestens ein Polyetherpolyol mit einer Funktionalität von 2 bis 8, vorzugsweise von 2 bis 6, besonders bevorzugt von 3, einer OH-Zahl in einem Bereich von 220 bis 290 mg KOH/g und einen PO-Gehalt in einer Menge von bis zu 25 Gew.-% und einen EO-Gehalt in einer Menge von mindestens 75 Gew.-%. Vorzugsweise liegt der Anteil primärer Hydroxylgruppen in Komponente I-A1.4 in einem Bereich von mindestens 90 % bezogen auf die Gesamtzahl primärer und sekundärer Hydroxylgruppen,

## Komponente II-A1

Die Herstellung der Komponenten II-A1 erfolgt im Prinzip wie die Herstellung von Komponenten I-A1 durch Addition von Alkylenoxiden an Starterverbindungen mit gegenüber Isocyanaten reaktionsfähigen Wasserstoffatomen. Diese Starterverbindungen weisen meist Funktionalitäten von 2 bis 8, vorzugsweise von 2 bis 6, besonders bevorzugt von 2 bis 4 auf und sind vorzugsweise hydroxyfunktionell. Beispiele für hydroxyfunktionelle Starterverbindungen sind Propylenglykol, Ethylenglykol, Diethylenglykol, Dipropylenglykol, 1,2-Butandiol, 1,3-Butandiol, 1,4-Butandiol, Hexandiol, Pentandiol, 3-Methyl-1,5-pentandiol, 1,12-Dodecandiol, Glycerin, Trimethylolpropan, Triethanolamin, Pentaerythrit, Sorbitol, Saccharose, Hydrochinon, Brenzcatechin, Resorcin, Bisphenol F, Bisphenol A, 1,3,5-Trihydroxybenzol, methylolgruppenhaltige Kondensate aus Formaldehyd und Phenol oder Melamin oder Harnstoff. Vorzugsweise wird als Starterverbindung Glycerin und/oder Trimethylolpropan eingesetzt.

Geeignete Alkylenoxide sind beispielsweise Ethylenoxid, Propylenoxid, 1,2-Butylenoxid bzw. 2,3 Butylenoxid und Styroloxid. Bevorzugt werden Propylenoxid und Ethylenoxid dem Reaktionsgemisch einzeln, im Gemisch oder nacheinander zugeführt. Werden die Alkylenoxide nacheinander dosiert, so enthalten die hergestellten Produkte (Polyetherpolyole) Polyetherketten mit Blockstrukturen. Produkte mit Ethylenoxidendblöcken sind beispielsweise durch erhöhte Konzentrationen an primären Endgruppen gekennzeichnet, welche den Systemen eine vorteilhafte Isocyanatreaktivität verleihen.

Ausgangskomponenten gemäß Komponente II-A1 sind Verbindungen mit mindestens zwei gegenüber Isocyanaten reaktionsfähigen Wasserstoffatomen von einem Molekulargewicht in der Regel von 400 - 18000. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 bis 6000, vorzugsweise 2000 bis 6000, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind und wie sie z.B. in der EP-A 0 007 502, Seiten 8 - 15, beschrieben werden. Die mindestens zwei Hydroxylgruppen aufweisenden Polyetherpolyole sind erfindungsgemäß bevorzugt. Vorzugsweise werden die Polyetherpolyole hergestellt durch Addition von Alkylenoxiden (wie beispielsweise Ethylenoxid,Propylenoxid und Butylenoxid oder deren Mischungen) an Startern wie Ethylenglykol, Propylenglykol, Glycerin, Trimethylolpropan, Pentaerythrit, Sorbit, Mannit und/oder Sucrose, so dass eine Funktionalität zwischen 2 und 8, vorzugsweise zwischen 2,5 und 6, besonders bevorzugt zwischen 2,5 und 4 eingestellt werden kann.

Vorzugsweise weist Komponente II-A1.1 mindestens ein Polyetherpolyol mit einer Funktionalität von 2 bis 8, vorzugsweise von 2 bis 6, besonders bevorzugt von 3 bis 4, einen EO-Gehalt von 0 bis 30 Gew.-%, bevorzugt von 0 bis 20 Gew.-%, und einer OH-Zahlen gemäß DIN 53240 von ≥ 10 bis ≤ 112 mg KOH/g, bevorzugt ≥ 20 bis ≤ 40 mg KOH/g auf. Der Anteil primärer Hydroxylgruppen in II-A1.1 liegt vorzugsweise in einem Bereich von 40 bis 95 %, besonders bevorzugt von 50 bis 90 % bezogen auf die Gesamtzahl primärer und sekundärer Hydroxylgruppen in Komponente II-A1.1

Komponente II-A1.2 weist vorzugsweise mindestens ein Polyetherpolyol mit einer Funktionalität von 2 bis 8, vorzugsweise von 2 bis 6, besonders bevorzugt von 3, einen EO-Gehalt > 60 Gew.-%, bevorzugt > 70 Gew.-%, und einer OH-Zahl gemäß DIN 53240 von 10 bis 112 mg KOH/g, bevorzugt 20 bis 50 mg KOH/g auf. Der Anteil primärer Hydroxylgruppen in II-A1.2 liegt vorzugsweise in einem Bereich von 40 bis 95%, besonders bevorzugt von 50 bis 90% bezogen auf die Gesamtzahl primärer und sekundärer Hydroxylgruppen in Komponente II-A1.2

Komponente II-A1.3 der erfindungsgemäßen Polyetherpolyol-Zusammensetzung II-A1 stellt eine Dispersion eines Polymers dar. Solche Dispersionen sind bekannt als Polymer-modifizierte Polyole und umfassen Polymer-modifizierte Polyetherpolyole, bevorzugt Graft-Polyetherpolyole, insbesondere solche auf Styrol- und/oder Acrylnitril-Basis, welche vorteilhafterweise durch in-situ Polymerisation von Styrol, Acrylnitril oder bevorzugt von Mischungen von Styrol und Acrylnitril (beispielsweise in einem Gewichtsverhältnis von 90:10 zu 10:90, insbesondere von 70:30 zu 30:70) in den obengenannten Polyetherpolyolen erhalten werden (nach Verfahren, wie sie in den folgenden Patentschriften beschrieben sind: DE 11 11 394, DE 12 22 669, DE 11 52 536, DE 11 52 537, US 3,304,273, US 3,383,351, US 3,523,093, GB 1040452, GB 987618).

Ebenfalls versteht man unter oben genannten Dispersionen solche, welche durch Polyharnstoffdispersion, die durch Umsetzung von Diaminen und Diisocyanaten in Gegenwart einer Polyolkomponente erhalten werden (PHD-Dispersionen), und/oder Urethangruppen enthaltende Dispersionen, die durch Umsetzung von Alkanolaminen und Diisocyanaten in einer Polyolkomponente erhalten werden (PIPA-Polyole).

Die füllstoffhaltigen Polyetherpolyolen gemäß Komponente II-A1.3 (PHD-Dispersion) werden beispielsweise hergestellt durch in situ Polymerisation eines Isocyanats oder einer Isocyanat-Mischung mit einem Diamin und/oder Hydrazin in einem Polyol gemäß Komponente II-A1.2. Vorzugsweise wird die PHD-Dispersion hergestellt durch Umsetzung einer Isocyanat-Mischung eingesetzt aus einer Mischung aus 75 bis 85 Gew.-% 2,4-Toluylendiisocyanat (2,4-TDI) und 15 bis 25 Gew.-% 2,6-Toluylendiisocyanat (2,6-TDI) mit einem Diamin und/oder Hydrazin. Verfahren zur Herstellung von PHD-Dispersionen sind beispielsweise beschrieben in US 4,089,835 und US 4,260,530.

Bei den füllstoffhaltigen Polyetherpolyolen gemäß Komponente II-A1.3 kann es sich auch um PIPA (Polyisocyanat-Polyaddition mit Alkanolaminen)-modifizierte Polyetherpolyole handeln, wobei das Polyetherpolyol eine Funktionalität von 2,5 bis 4 und ein Molekulargewicht von 500 bis 18000 aufweist.

Verbindungen der Komponente II-A1.3 weisen eine OH-Zahl gemäß DIN 53240 von 10 bis 60 mg KOH/g, eine Hydroxylfunktionalität von 2 bis 6, bevorzugt von 2 bis 4 besonders bevorzugt von 3, einen PO-Gehalt in einer Menge von 70 bis 90 Gew.-% und einen EO-Gehalt in einer Menge von 10 bis 30 Gew.-% auf.

## Komponente A2

Als Komponente A2 werden Wasser und/oder physikalische Treibmittel eingesetzt. Als physikalische Treibmittel werden beispielsweise Kohlendioxid und/oder leicht flüchtige organische Substanzen wie z.B. Dichlormethan als Treibmittel eingesetzt.

## Komponente A3

Gegebenenfalls werden als Komponente A3 Verbindungen mit mindestens zwei gegenüber Isocyanaten reaktionsfähigen Wasserstoffatomen und einer OH-Zahl von 140 mg KOH/g bis 900 mg KOH/g eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können als Komponente A3 Ethanolamin, Diethanolamin, Triethanolamin, Sorbit und/oder Glycerin eingesetzt werden. Weitere Beispiele für Verbindungen gemäß Komponente A4 werden in EP-A 0 007 502, Seiten 16 - 17, beschrieben.

## Komponente A4

Als Komponente A4 werden gegebenenfalls Hilfs- und Zusatzstoffe verwendet wie

a) Katalysatoren (Aktivatoren),
b) oberflächenaktive Zusatzstoffe (Tenside), wie Emulgatoren und Schaumstabilisatoren insbesondere solche mit niedriger Emission wie beispielsweise Produkte der Tegostab® LF-Serie,
c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise in der EP-A 0 000 389, Seiten 18 - 21, beschrieben. Weitere Beispiele von gegebenenfalls erfindungsgemäß mitzuverwendenden Hilfs- und Zusatzstoffe sowie Einzelheiten über Verwendungs- und Wirkungsweise dieser Hilfs- und Zusatzstoffe sind im Kunststoff-Handbuch, Band VII, herausgegeben von G. Oertel, Carl-Hanser-Verlag, München, 3. Auflage, 1993, z.B. auf den Seiten 104-127 beschrieben.

Als Katalysatoren werden bevorzugt eingesetzt: aliphatische tertiäre Amine (beispielsweise Trimethylamin, Tetramethylbutandiamin, 3-Dimethylaminopropylamin, N,N-Bis(3-dimethylaminopropyl)-N-isopropanolamin), cycloaliphatische tertiäre Amine (beispielsweise 1,4-Diaza(2,2,2)bicyclooctan), aliphatische Aminoether (beispielsweise Bisdimethylaminoethylether, 2-(2-Dimethylaminoethoxy)ethanol und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff und Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Komponente B

Als Komponente B werden aliphatische, cycloaliphatische, araliphatische, aromatische und heterocyclische Di- oder Polyisocyanate eingesetzt, wie sie z.B. von W. Siefken in Justus Liebigs Annalen der Chemie, 562, Seiten 75 bis 136, beschrieben werden, beispielsweise solche der Formel (I)

$$Q(NCO)_n \qquad (I)$$

in der

n = 2 - 4, vorzugsweise 2 -3,
und
Q einen aliphatischen Kohlenwasserstoffrest mit 2 - 18, vorzugsweise 6 - 10 C-Atomen, einen cycloaliphatischen Kohlenwasserstoffrest mit 4 - 15, vorzugsweise 6 - 13 C-Atomen oder einen araliphatischen Kohlenwasserstoffrest mit 8 - 15, vorzugsweise 8 - 13 C-Atomen bedeuten.

Beispielsweise handelt es sich um solche Polyisocyanate, wie sie in der EP-A 0 007 502, Seiten 7 - 8, beschrieben werden. Bevorzugt werden in der Regel die technisch leicht zugänglichen Polyisocyanate, z.B. das 2,4- und 2,6-Toluylendiisocyanat, sowie beliebige Gemische dieser Isomeren ("TDI"); Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate"), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten. Vorzugsweise wird als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI"), sowie deren Mischungen eingesetzt.

In einer erfindungsgemäßen Ausführungsform wird in Reaktionsgemisch I als Polyisocyanat vorzugsweise 4,4'- und 2,4'- und 2,2'-Diphenylmethandiisocyanat und Polyphenylpolymethylenpolyisocyanat ("Mehrkern-MDI"), sowie deren Mischungen eingesetzt und in Reaktionsgemisch II als Polyisocyanat mindestens eine Verbindung ausgewählt aus der Gruppe bestehend aus 2,4- und 2,6-Toluylendiisocyanat, 4,4'- und 2,4'- und 2,2'-Diphenylmethandiisocyanat und Polyphenylpolymethylenpolyisocyanat ("Mehrkern-MDI"), sowie deren Mischungen eingesetzt.

Ein einer weiteren erfindungsgemäßen Ausführungsform wird in Reaktionsgemisch I als Polyisocyanat vorzugsweise 4,4'- und 2,4'- und 2,2'-Diphenylmethandiisocyanat und Polyphenylpolymethylenpolyisocyanat ("Mehrkern-MDI"), sowie deren Mischungen und in Reaktionsgemisch II als Polyisocyanat vorzugsweise 4,4'- und 2,4'- und 2,2'-Diphenylmethandiisocyanat und Polyphenylpolymethylenpolyisocyanat ("Mehrkern-MDI") eingesetzt.

Das erfindungsgemäße Verfahren zeichnet sich durch eine sehr gute Reproduzierbarkeit der Lage der horizontal angeordneten Zonen unterschiedlicher Härte in den erfindungsgemäß hergestellten PUR-Weichformschaumkörper aus. Weiterhin können nach dem erfindungsgemäßen Verfahren Formschaumkörper mit mehreren Zonen unterschiedlicher Härte hergestellt werden, wobei mindestens zwei der Zonen unterschiedlicher Härte in horizontaler Anordnung zueinander vorliegen, was eine exakte Einstellung unterschiedlicher Härten in einem Formkörper ermöglicht.

Die nach der Erfindung erhältlichen Polyurethanschaumstoffe finden beispielsweise Anwendung zur Herstellung von Möbelpolsterungen, Textileinlagen, Matratzen, Automobilsitze, Kopfstützen, Armlehnen, Schwämme und Bauelemente, sowie Sitz- und Armaturenverkleidungen.

**Beispiele**

**Eingesetzte Rohstoffe:**

Polyol I-A1.1: Propylenglykol gestarteter Polyether mit Propylenoxid alkyliert und mit einer OH-Zahl von 56 mg KOH/g.

(fortgesetzt)

| | | |
|---|---|---|
| Polyol I-A1.2: | Difunktionelles Polyetherpolyol mit einer OH-Zahl von 57 mg KOH / g, hergestellt mittels KOH-katalysierter Addition von Propylenoxid und Ethylenoxid im Gewichtsverhältnis von 50 zu 50 unter Verwendung von Propylenglykol als Starterverbindung und mit ca. 60 mol-% primären OH-Gruppen. | |
| Polyol I-A1.3: | Polyetherpolyol mit einer OH-Zahl von ca. 20 mg KOH/g, hergestellt mittels KOH-katalysierter Addition von Propylenoxid und Ethylenoxid im Gewichtsverhältnis von 80 zu 20 unter Verwendung von Glycerin Starterverbindung und mit ca. 85 mol-% primären OH-Gruppen und enthaltend ca. 43 Gew.-% Füllsstoff (Copolymer im Wesentlichen aus Styrol und Acrylnitril). | |
| Polyol I-A1.4 | Tripmethylolpropan gestarteter Polyether mit ca. 1 Gew.-% Propylenoxid und 99 Gew.-% Ethylenoxid und einer OH-Zahl von 255 mg KOH/g und mit mehr als 80 mol-% primären OH-Gruppen. | |
| Polyol II-A1.1: | Polyetherpolyol mit einer OH-Zahl von ca. 27 mg KOH/g, hergestellt mittels KOH-katalysierter Addition von Propylenoxid und Ethylenoxid im Gewichtsverhältnis von 85 zu 15 unter Verwendung von Glycerin als Starterverbindung und mit ca. 85 mol-% primären OH-Gruppen. | |
| Polyol II-A1.2: | Polyetherpolyol mit einer OH-Zahl von ca. 37 mg KOH/g, hergestellt durch mittels KOH-katalysierter Addition von Propylenoxid und Ethylenoxid im Gewichtsverhältnis von 27 zu 73 unter Verwendung von Glycerin Starterverbindung ca. 83 mol-% primären OH-Gruppen. | |
| B-1: | Mischung enthaltend 60 Gew.-% 4,4'-Diphenylmethandiisocyanat, 19 Gew.-% 2,4'-Diphenylmethandiisocyanat und 19 Gew.-% Polyphenylpolymethylenpolyisocyanat ("Mehrkern-MDI") mit einem NCO-Gehalt von 32,5 Gew.-%. | |

Niax® L6164 als Komponente A4 der Firma Momentive Performance Materials Inc., Dabco® NE 1070 als Komponente A4 der Firma Air Products GmbH, DE Dabcao® NE 300 als Komponente A4 der Firma Air Products GmbH, DE Tegostab®B8734LF als Komponente A4 der Firma Evonik Industries AG, DE Jeffcat® ZR50 als Komponente A4 der Firma

Die Bestimmung des molaren Anteils der primären OH-Gruppen erfolgt mittels $^1$H-NMR Spektroskopie (Bruker DPX 400, Deuterochloroform):

Zur Bestimmung des Gehaltes an primären OH-Gruppen wurden die Polyetherpolyol-Proben zunächst peracetyliert.

Dabei wurde folgendes Peracetylierungsgemisch angesetzt:

9,4 g Essigsäureanhydrid p.A.
1,6 g Essigsäure p.A.
100 ml Pyridin p.A.

Für die Peracetylierungsreaktion wurden 10 g Polyetherpolyol in einen 300 ml-Schlifferlenmeyerkolben eingewogen. Das Volumen an Peracetylierungsgemisch richtete sich nach der OH-Zahl des zu peracetylierenden Polyetherpolyols, wobei (jeweils bezogen auf 10 g Polyetherpolyol) die OH-Zahl des Polyetherpolyols aufgerundet wird auf die nächste 10er-Stelle; Pro 10 mg KOH/g werden dann 10 ml an Peracetylierungsgemisch zugesetzt. Beispielsweise wurden der Probe von 10 g eines Polyetherpolyols mit einer OH-Zahl = 45,1 mg KOH/g entsprechend 50 ml Peracetylierungsgemisch zugesetzt.

Nach der Zugabe von Siedeperlen aus Glas wurde der Schlifferlenmeyerkolben mit einem Steigrohr (Luftkühler) versehen und die Probe 75 min bei schwachem Rückfluss gekocht. Das Probengemisch wurde dann in einen 500 ml-Rundkolben überführt, und über einen Zeitraum von 30 min bei 80°C und 10 mbar (absolut) wurden flüchtige Bestandteile (im wesentlichen Pyridin, Essigsäure und überschüssiges Essigsäureanhydrid) abdestilliert. Der Destillationsrückstand wurde anschließend dreimal mit je 100 ml Cyclohexan (alternativ wurde Toluol eingesetzt in den Fällen, in denen sich der Destillationsrückstand in Cyclohexan nicht löste) versetzt und flüchtige Bestandteile jeweils bei 15 min bei 80 °C und 400 mbar (absolut) entfernt. Anschließend wurden flüchtige Bestandteile der Probe eine Stunde bei 100 °C und 10 mbar (absolut) entfernt.

Zur Bestimmung der molaren Anteile an primären und sekundären OH-Endgruppen im Polyethercarbonatpolyol wurde die so vorbereitete Probe in deuteriertem Chloroform gelöst und mittels $^1$H-NMR (Firma Bruker, DPX 400, 400 MHz, Pulsprogramm zg30, Wartezeit d1: 10s, 64 Scans) untersucht. Die relevanten Resonanzen im $^1$H-NMR (bezogen auf TMS = 0 ppm) sind wie folgt:

Methylsignal einer peracetylierten sekundären OH-Endgruppe: 2,04 ppm

Methylsignal einer peracetylierten primären OH-Endgruppe: 2,07 ppm

Der molare Anteil der sekundären und primären OH-Endgruppen ergibt sich dann wie folgt: Anteil sek. OH-Endgruppen

$$(CH-OH) = F(2,04)/(F(2,04) + F(2,07)) * 100 \% \qquad (II)$$

Anteil prim. OH-Endgruppen

$$(CH2-OH) = F(2,07)/(F(2,04) + F(2,07)) * 100 \% \qquad (III)$$

In den Formeln (II) und (III) steht F für Fläche der Resonanz bei 2,04 ppm bzw. 2,07 ppm.

Die Kennzahl (Isocyanat Index) gibt das Verhältnis der tatsächlich eingesetzten Isocyanat-Menge zur stöchiometrischen, d.h. berechneten Isocyanat (NCO)-Menge an:

$$\text{Kennzahl} = [(\text{Isocyanat-Menge eingesetzt}) : (\text{Isocyanat-Menge berechnet})] \bullet 100 \qquad (II)$$

Die Rohdichte wurde bestimmt gemäß DIN EN ISO 3386-1-98.

Die OH-Zahl wurde bestimmt gemäß DIN 53240.

**Formulierung I (Viskoelastische Formulierung):**

| | | |
|---|---|---|
| I-A1.1 | [Tle.] | 23,3 |
| I-A1.2 | [Tle.] | 46,6 |
| I-A1.3 | [Tle.] | 20 |
| I-A1.4 | [Tle.] | 10 |
| | | |
| NIAX® L-6164 (A4) | [Tle.] | 2 |
| WASSER (A2) | [Tle.] | 1,45 |
| DABCO® NE1070 (A4) | [Tle.] | 1,6 |
| | | |
| B.1 | [Tle.] | 33,04 |

**Formulierung II:**

| | | |
|---|---|---|
| II-A1.1 | [Tle.] | 97 |
| II-A1.2 | [Tle.] | 3,0 |
| | | |
| Diethanolamin (A3) | [Tle.] | 1,2 |
| Tegostab® B8734 LF (A4) | [Tle.] | 0,9 |
| WASSER (A2) | [Tle.] | 3,5 |
| JEFFCAT® ZR50 (A4) | [Tle.] | 0,40 |
| DABCO® NE300 (A4) | [Tle.] | 0,1 |
| | | |
| B.1 | [Tle.] | 61,06 |

**Herstellung der Polyurethan-Weichformschaumkörpers mit 3-Zonen unterschiedlicher Härte.**

Unter den für die Herstellung von Polyurethanweichformschaumstoffen üblichen Verarbeitungsbedingungen werden die Ausgangskomponenten im Einstufenverfahren verarbeitet.

In Tabelle 2 ist die Kennzahl der Verarbeitung (danach ergibt sich die Menge an einzusetzender Menge Polyisocyanat im Verhältnis zu der Formulierung I und II.

Mit der Formulierung I werden zwei Punktfüllungen (1. und 2. Punktfüllung in Abbildung 1) mit je 150 g Schussgewicht bei einem Index von 90 durchgeführt. Nach einer Standzeit von 4 min wird mit der Formulierung II-1 jeweils zwei Punktfüllungen (in Abbildung 1 Punktfüllungen 3 & 4) mit je 260 g Schussgewicht bei einem Index von 110 durchgeführt. Den Punktfüllungen mit der Formulierung II-1 folgt im Anschluss ein Eintrag als Zeilenfüllung (in Abbildung als Pfeil gekennzeichnet) mit einem Schussgewicht von 600 g bei einem Index von 85. Nach weiteren 5 min wird das Formteil entformt und mittels einer Vakuumcrashanlage aufgedrückt.

Abbildung 1 zeigt ein Beispiel für einen Formhohlkörper, der mit Stegen abgetrennte Bereiche aufweist.

Die Reproduzierbarkeit der horizontalen Schichtung wurde anhand der Eindruckhärtebestimmung nach DIN EN ISO 2439 an 20 Formschaumteilen analog der oben beschriebenen Herstellweise nachgewiesen. Die Ergebnisse sind in Tabelle 1 zusammengefasst.

**Tabelle 1:** Eindruckhärtebestimmung mit Abweichung zum Mittelwert (Ø)

| Formteil | 1 | 2 | 3 | 4 | 5 | 6 | 7 |
|---|---|---|---|---|---|---|---|
| Eindruckhärte [N] | 318,8 | 317,5 | 317,9 | 310,9 | 311,2 | 304,4 | 318,3 |
| Abweichung gegen Ø[1] [%] | 5,5 | 5,0 | 5,2 | 2,8 | 3,0 | 0,7 | 5,3 |
| **Formteil** | **8** | **9** | **10** | **11** | **12** | **13** | **14** |
| Eindruckhärte [N] | 308,5 | 318,9 | 291,2 | 285,8 | 306,3 | 293,6 | 289,8 |
| Abweichung gegen Ø[1] [%] | 2,1 | 5,5 | -3,7 | -5,4 | 1,3 | -2,9 | -4,1 |
| **Formteil** | **15** | **16** | **17** | **18** | **19** | **20** | |
| Eindruckhärte [N] | 285,0 | 299,2 | 291,9 | 296,3 | 294,1 | 285,9 | |
| Abweichung gegen Ø[1] [%] | -5,7 | -1,0 | -3,4 | -2,0 | -2,7 | -5,4 | |
| [1] Mittelwert Ø = 302,3 N | | | | | | | |

Die physikalischen Eigenschaften der einzelnen Schaumtypen (Formulierung I Index 90, Formulierung II-1 Index 110 sowie Formulierung II-2 Index 85) sind in Tabelle 2 dargestellt. Das Raumgewicht wurde bestimmt gemäß DIN EN ISO 845. Die Stauchhärte (CLD 40 %) wurde bestimmt gemäß DIN EN ISO 3386-1-98 bei einer Verformung von 40 %, 4. Zyklus. Die Zugfestigkeit und die Bruchdehnung wurden bestimmt gemäß DIN EN ISO 1798. Der Druckverformungsrest (DVR 50%) wurde bestimmt gemäß DIN EN ISO 1856-2000 bei 50 % Verformung.

**Tabelle 2:** Polyurethan-Weichformschaumstoffe; Eigenschaften

| | | Formulierung I | Formulierung II-1 | Formulierung II-2 |
|---|---|---|---|---|
| Schaumtyp | | Viskoelastisch | HR | HR |
| Kennzahl | | 90 | 110 | 85 |
| Zellstruktur | | Fein | fein | fein |
| Rohdichte | [kg/m$^3$] | 83 | 55 | 54 |
| Zugfestigkeit | [kPa] | 90 | 247 | 150 |
| Bruchdehnung | [%] | 180 | 85 | 112 |
| Stauchhärte | [kPa] | 2,7 | 9,6 | 4,3 |
| DVR 50 % | [%] | 11 | 4,9 | 5,6 |

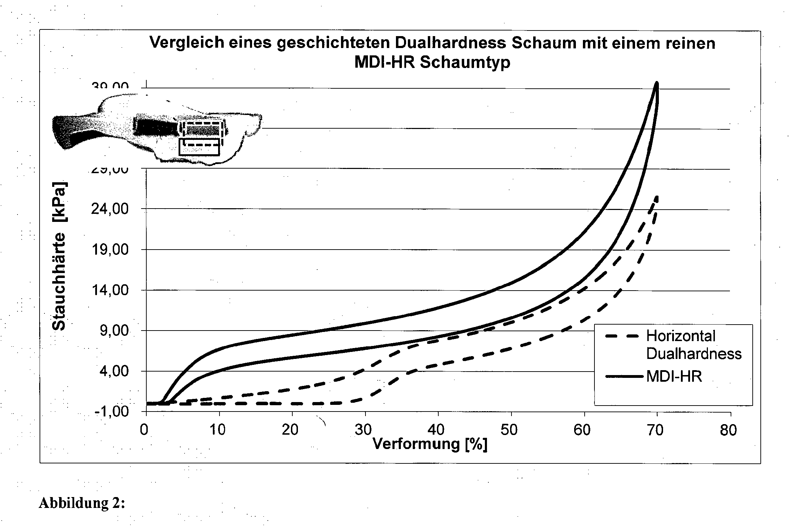

Abbildung 2 zeigt den Vergleich der unterschiedlichen horizontal geschichteten Härtebereiche im Formschaumteil. In Abbildung 2 werden die Stauchhärteverläufe eines reinen MDI-HR Schaumtyp mit dem erfindungsgemäßen Schaum, der horizontal angeordnete Bereiche unterschiedlicher Härte aufweist verglichen. Auffällig ist der Unterschied zwischen einer Stauchung im Bereich von 0 bis 40 %. Zwischen 0 bis 30 % Stauchung resultiert die Kurve beim erfindungsgemäßen Schaum nur vom weicheren, viskoelastischen Schaum (resultierend aus Mischung I). Zwischen 30% und 40 % kommen beide Schaumtypen zum Tragen. Ab einer Stauchung von 40 % trägt wesentlich der MDI-HR Schaum (resultierend aus der Mischung II) zur Härte bei.

Abbildung 3 zeigt einen Formschaumkörper in Sitzform, der nach dem erfindungsgemäßen Verfahren hergestellt wurde. Die dunklen Bereiche stellen den Bereich der Formulierung I dar, die helleren Bereiche an den Seiten und vorne stellen die Bereiche der Formulierung II dar. Die Sitzfläche (dunkel) ist horizontal zu dem gesamten Sitzbereich angeordnet.

**Patentansprüche**

1. Verfahren zur Herstellung von Polyurethan (PUR)-Weichformschaumstoffen mit horizontal angeordneten Zonen unterschiedlicher Härte **dadurch gekennzeichnet, dass** in Schritt

   1) ein fließfähiges Reaktionsgemisch I in den Formhohlkörper eingebracht und frei geschäumt wird,
   2) nach 1 bis 6 min nach Einbringen des Reaktionsgemisch I in den Formhohlkörper mindestens ein fließfähiges Reaktionsgemisch II in den Formhohlkörper eingebracht wird,
   3) Aushärtung in der Form und
   4) Entformen des nach Schritt 4 gebildeten PUR-Weichformschaumstoffs,
   wobei das fließfähige Reaktionsgemisch I einen PUR-Weichschaumstoff mit einer Rohdichte von 30 bis 90 kg/m$^3$ ausbildet und das fließfähige Reaktionsgemisch II einen PUR-Weichformschaumstoff mit einer Rohdichte von 30 bis 85 kg/m$^3$ ausbildet, wobei in Schritt 1 ein Reaktionsgemisch I enthaltend die folgenden Komponenten eingesetzt werden:

   Komponente I-A1

   I-A1.1 mindestens ein Polyetherpolyol mit einer Funktionalität von 2 bis 8, einer Hydroxyl (OH)-Zahl gemäß DIN 53240 in einem Bereich von 20 bis 70 mg KOH/g und einem Polyoxypropylen (PO)-Gehalt in einer Menge von 50 bis 100 Gew.-% und einen Polyoxyethylen (EO)-Gehalt in einer Menge von 0 bis 50 Gew.-%,
   I-A1.2 gegebenenfalls mindestens ein Polyetherpolyol mit einer Hydroxyl-Funktionalität von 2 bis 8, einer OH-Zahl gemäß DIN 53240 in einem Bereich von 50 bis 65 mg KOH/g und einem PO-Gehalt in einer Menge von 45 bis 55 Gew.-% und einen EO-Gehalt in einer Menge von 45 bis 55 Gew.-%;
   I-A1.3. gegebenenfalls mindestens eine Dispersion eines Polymers in einem Polyetherpolyol, wobei die OH-Zahl gemäß DIN 53240 der Dispersion in einem Bereich von 10 bis 30 mg KOH/g liegt und wobei das Polyetherpolyol eine Hydroxyl-Funktionalität 2 bis 6, einen PO-Gehalt in einer Menge von 70 bis 90 Gew.-% und einen EO-Gehalt in einer Menge von 10 bis 30 Gew.-% aufweist;
   I-A1.4 gegebenenfalls mindestens ein Polyetherpolyol mit einer Funktionalität von 2 bis 8, einer OH-Zahl in einem Bereich von 220 bis 290 mg KOH/g und einen PO-Gehalt in einer Menge von bis zu 25 Gew.-% und einen EO-Gehalt in einer Menge von mindestens 75 Gew.-%;

   A2 Wasser und/oder physikalisches Treibmittel,
   A3 gegebenenfalls gegenüber Isocyanaten reaktionsfähige Wasserstoffatome aufweisende Verbindungen mit einer OH-Zahl von 140 mg KOH/g bis 900 mg KOH/g,
   A4 Hilfs- und Zusatzstoffe wie

   a) Katalysatoren,
   b) oberflächenaktive Zusatzstoffe,
   c) Pigmente oder Flammschutzmittel, und

   B Di- und/oder Polyisocyanate,
   wobei die Herstellung bei einer Kennzahl von 70 bis 130 erfolgt.

2. Verfahren gemäß Anspruch 1, **dadurch gekennzeichnet, dass** das Reaktionsgemisch I Komponente I-A1.1 in einer Menge von 10 bis 100 Gew.-Teilen; Komponente I-A1.2 in einer Menge von 0 bis 70 Gew.-Teilen; Komponente I-A1.3 in einer Menge von 0 bis 40 Gew.-Teilen; Komponente I-A1.4 in einer Menge von 0 bis 25 Gew.-Teilen;

Komponente A2 in einer Menge von 0,5 bis 25 Gew.-Teilen; Komponente A3 in einer Menge von 0 bis 10 Gew.-Teilen; Komponente A4 in einer Menge von 0,05 bis 10 Gew.-Teilen, wobei die Summe der Massenanteile der Komponenten I-A1.1 bis I-A1.4 100 ergibt, und wobei die Gew.-Teile der Komponenten A2 bis A4 auf die Summe der Komponente I-A1 bezogen sind, enthält.

3. Verfahren gemäß Anspruch 1, **dadurch gekennzeichnet, dass** das Reaktionsgemisch I Komponente I-A1.1 in einer Menge von 10 bis 40 Gew.-Teilen, Komponente I-A1.2 in einer Menge von 30 bis 70 Gew.-Teilen, Komponente I-A1.3 in einer Menge von 5 bis 40 Gew.-Teile und Komponente I-A1.4 in einer Menge von 5 bis 25 Gew.-Teilen, Komponente A2 in einer Menge von 0,5 bis 25 Gew.-Teilen; Komponente A3 in einer Menge von 0 bis 10 Gew.-Teilen; Komponente A4 in einer Menge von 0,05 bis 10 Gew.-Teilen, wobei die Summe der Massenanteile der Komponenten I-A1.1 bis I-A1.4 100 ergibt, und wobei die Gew.-Teile der Komponenten A2 bis A4 auf die Summe der Komponente I-A1 bezogen sind, enthält.

4. Verfahren gemäß einem der Ansprüche 1 bis 3, **dadurch gekennzeichnet, dass** in Schritt 2 ein Reaktionsgemisch II enthaltend die Komponenten

Komponente II-A1

II-A1.1 mindestens einem Polyetherpolyol mit einer Funktionalität von 2 bis 8, einem Polyoxyethylen (EO)-Gehalt von 0 bis 30 Gew.-%, einer OH-Zahl gemäß DIN 53240 von $\geq$ 10 mg KOH/g bis $\leq$ 112 mg KOH/g,
II-A1.2 gegebenenfalls mindestens einem Polyetherpolyol mit einer Funktionalität von 2 bis 8, einem Polyoxyethylen (EO)-Gehalt von > 60 Gew.-%, einer OH-Zahl gemäß DIN 53240 von $\geq$ 10 mg KOH/g bis $\leq$ 112 mg KOH/g,
II-A1.3 gegebenenfalls mindestens eine Dispersion eines Polymers in einem Polyetherpolyol, wobei die OH-Zahl gemäß DIN 53240 der Dispersion in einem Bereich von 10 bis 60 mg KOH/g liegt und wobei das Polyetherpolyol eine Hydroxyl-Funktionalität 2 bis 6, einen Polyoxypropylen (PO)-Gehalt in einer Menge von 70 bis 90 Gew.-% und einen EO-Gehalt in einer Menge von 10 bis 30 Gew.-% aufweist;

A2 Wasser und/oder physikalischen Treibmitteln,
A3 gegebenenfalls gegenüber Isocyanaten reaktionsfähigen Wasserstoffatomen aufweisenden Verbindungen mit einer OH-Zahl von 140 mg KOH/g bis 900 mg KOH/g,
A4 ggf. Hilfs- und Zusatzstoffen wie

a) Katalysatoren,
b) oberflächenaktive Zusatzstoffe,
c) Pigmente oder Flammschutzmittel, und

B Di- oder Polyisocyanaten,
wobei die Herstellung des Polyurethan-Weichschaumes bei einer Kennzahl von 75 bis 120 erfolgt.

5. Verfahren gemäß Anspruch 4, **dadurch gekennzeichnet, dass** Komponente II-A1. 1 in einer Menge von 10 bis 100 Gew.-Teilen; Komponente II-A1.2 in einer Menge von 0 bis 10 Gew.-Teilen und Komponente II-A1.3 in einer Menge von 0 bis 90 Gew.-Teilen; Komponente A2 in einer Menge von 0,5 bis 25 Gew.-Teilen; Komponente A3 von 0 bis 10 Gew.-Teilen; Komponente A4 in einer Menge von 0,05 bis 10 Gew.-Teilen, wobei die Summe der Gewichtsteile II-A1.1 bis II-A1.3 100 ergibt, und wobei die Gew.-Teile der Komponenten A2 bis A4 auf die Summe der Komponente II-A1 bezogen sind, enthalten sind.

6. Verfahren gemäß einem der Ansprüche 1 bis 5, **dadurch gekennzeichnet, dass** in Schritt 2 mehrere Reaktionsgemische II nacheinander in den Formhohlkörper eingebracht werden, wobei sich diese Reaktionsgemische II in ihrer Stauchhärte, bestimmt nach DIN EN ISO 3386-1-98, nach Ausbildung des PUR-Weichschaumstoffs unterscheiden und wobei mindestens eines dieser Reaktionsgemische II in einer horizontalen Anordnung zu dem in Schritt 1) frei geschäumten PUR-Weichschaums angeordnet ist.

7. Verfahren gemäß einem der Ansprüche 1 bis 6, **dadurch gekennzeichnet, dass** in Schritt 2 die fließfähigen Reaktionsgemische II.1 und II.2 eingesetzt werden, wobei diese fließfähigen Reaktionsgemische II.1 und II.2 die gleiche Zusammensetzung aufweisen und wobei das fließfähige Reaktionsgemisch II.1 bei einer Kennzahl von 95 bis 120 und das fließfähige Reaktionsgemisch II.2 bei einer Kennzahl von 75 bis 95 hergestellt wird.

8. Verfahren gemäß einem der Ansprüche 1 bis 7, **dadurch gekennzeichnet, dass** Komponente B ein oder mehrere aromatische Polyisocyanate enthält.

9. Verfahren gemäß einem der Ansprüche 1 bis 8, **dadurch gekennzeichnet, dass** das fließfähige Reaktionsgemisch I als Komponente B mindestens eine Verbindung ausgewählt aus der Gruppe bestehend aus 4,4'-, 2,4'- und 2,2'-Diphenylmethandiisocyanat und Polyphenylpolymethylenpolyisocyanat ("Mehrkern-MDI"), sowie deren Mischungen enthält.

10. Verfahren gemäß einem der Ansprüche 1 bis 9, **dadurch gekennzeichnet, dass** das fließfähige Reaktionsgemisch I einen viskoelastischen Schaum mit einer Stauchhärte gemäß DIN EN ISO 3386-1-98 von 2,0 bis 4,0 kPa ausbildet.

11. Polyurethan-Weichformschaumstoffe erhältlich nach dem Verfahren gemäß einem der Ansprüche 1 bis 10.

12. Polyurethan-Weichformteile erhältlich nach dem Verfahren gemäß einem der Ansprüche 1 bis 10.

13. Verwendung der Polyurethan-Weichformschaumstoffe gemäß Anspruch 11 zur Herstellung von Möbelpolsterungen, Textileinlagen, Matratzen, Automobilsitzen und Kopfstützen.

**Claims**

1. Method for producing molded flexible polyurethane (PU) foams having horizontally arranged zones of differing hardness, **characterized in that** in step

   1) a flowable reaction mixture I is imported into the mold cavity and free-foamed,
   2) from 1 to 6 min after importing said reaction mixture I into the mold cavity at least one flowable reaction mixture II is imported into the mold cavity,
   3) curing in the mold, and
   4) demolding the molded flexible PU foam formed after step 4,

   wherein said flowable reaction mixture I forms a flexible PU foam having an apparent density of 30 to 90 kg/m$^3$ and said flowable reaction mixture II forms a molded flexible PU foam having an apparent density of 30 to 85 kg/m$^3$, wherein step 1 utilizes a reaction mixture I containing the following components:

   component I-A1

   I-A1.1 at least one polyether polyol having a functionality of 2 to 8, a DIN 53240 hydroxyl (OH) number in the range from 20 to 70 mg KOH/g and a polyoxypropylene (PO) content in the range from 50 to 100 wt% and a polyoxyethylene (EO) content in the range from 0 to 50 wt%,
   I-A1.2 optionally at least one polyether polyol having a hydroxyl functionality of 2 to 8, a DIN 53240 OH number in the range from 50 to 65 mg KOH/g and a PO content in the range from 45 to 55 wt% and an EO content in the range from 45 to 55 wt%;
   I-A1.3. optionally at least one dispersion of a polymer in a polyether polyol, wherein the dispersion has a DIN 53240 OH number in the range from 10 to 30 mg KOH/g and wherein the polyether polyol has a hydroxyl functionality of 2 to 6, a PO content in the range from 70 to 90 wt% and an EO content in the range from 10 to 30 wt%;
   I-A1.4 optionally at least one polyether polyol having a functionality of 2 to 8, an OH number in the range from 220 to 290 mg KOH/g and a PO content of up to 25 wt% and an EO content of at least 75 wt%;

   A2 water and/or a physical blowing agent,
   A3 optionally isocyanate-reactive hydrogen compounds having an OH number of 140 mg KOH/g to 900 mg KOH/g,
   A4 auxiliary and added-substance materials such as

   a) catalysts,
   b) surface-active added-substance materials, and
   c) pigments or flame retardants, and

B di- and/or polyisocyanates,
wherein the foam is produced at an isocyanate index of 70 to 130.

2. Method according to Claim 1, **characterized in that** said reaction mixture I contains component I-A1.1 in an amount of 10 to 100 parts by weight; component I-A1.2 in an amount of 0 to 70 parts by weight; component I-A1.3 in an amount of 0 to 40 parts by weight; component I-A1.4 in an amount of 0 to 25 parts by weight; component A2 in an amount of 0.5 to 25 parts by weight; component A3 in an amount of 0 to 10 parts by weight; component A4 in an amount of 0.05 to 10 parts by weight, wherein the proportional parts by mass of components I-A1.1 to I-A1.4 add up to 100 and wherein the parts by weight of components A2 to A4 are based on total component I-A1.

3. Method according to Claim 1, **characterized in that** said reaction mixture I contains component I-A1.1 in an amount of 10 to 40 parts by weight, component I-A1.2 in an amount of 30 to 70 parts by weight, component I-A1.3 in an amount of 5 to 40 parts by weight and component I-A1.4 in an amount of 5 to 25 parts by weight, component A2 in an amount of 0.5 to 25 parts by weight; component A3 in an amount of 0 to 10 parts by weight; component A4 in an amount of 0.05 to 10 parts by weight, wherein the proportional parts by mass of components I-A1.1 to I-A1.4 add up to 100 and wherein the parts by weight of components A2 to A4 are based on total component I-A1.

4. Method according to any of Claims 1 to 3, **characterized in that** in step 2 a reaction mixture II containing the components

   component II-A1

   II-A1.1 at least one polyether polyol having a functionality of 2 to 8, a polyoxyethylene (EO) content of 0 to 30 wt%, a DIN 53240 OH number of $\geq$10 mg KOH/g to $\leq$ 112 mg KOH/g,
   II-A1.2 optionally at least one polyether polyol having a functionality of 2 to 8, a polyoxyethylene (EO) content of > 60 wt%, a DIN 53240 OH number of $\geq$10 mg KOH/g to $\leq$ 112 mg KOH/g,
   II-A1.3 optionally at least one dispersion of a polymer in a polyether polyol, wherein the dispersion has a DIN 53240 OH number in the range from 10 to 60 mg KOH/g and wherein the polyether polyol has a hydroxyl functionality of 2 to 6, a polyoxypropylene (PO) content in the range from 70 to 90 wt% and an EO content in the range from 10 to 30 wt%;

   A2 water and/or physical blowing agents,
   A3 optionally isocyanate-reactive hydrogen compounds having an OH number of 140 mg KOH/g to 900 mg KOH/g,
   A4 optionally auxiliary and added-substance materials such as

   a) catalysts,
   b) surface-active added-substance materials,
   c) pigments or flame retardants, and

   B di- or polyisocyanates,
   wherein the flexible polyurethane foam is produced at an isocyanate index of 75 to 120.

5. Method according to Claim 4 **characterized by** utilizing component II-A1.1 in an amount of 10 to 100 parts by weight; component II-A1.2 in an amount of 0 to 10 parts by weight and component II-A1.3 in an amount of 0 to 90 parts by weight; component A2 in an amount of 0.5 to 25 parts by weight; component A3 of 0 to 10 parts by weight; component A4 in an amount of 0.05 to 10 parts by weight, wherein the parts by weight of II-A1.1 to II-A1.3 add up to 100 and wherein the parts by weight of components A2 to A4 are based on total component II-A1.

6. Method according to any of Claims 1 to 5, **characterized in that** a plurality of reaction mixtures II are imported in succession into the mold cavity in step 2, wherein these reaction mixtures II differ in the DIN EN ISO 3386-1-98 compression load deflection of the flexible PU foam they produce and wherein at least one of these reaction mixtures II is in a horizontal arrangement relative to the flexible PU from free-foamed in step 1).

7. Method according to any of Claims 1 to 6, **characterized in that** step 2 utilizes flowable reaction mixtures II.1 and II.2, wherein said flowable reaction mixtures II.1 and II.2 have the same composition and wherein said flowable reaction mixture II.1 is produced at an isocyanate index of 95 to 120 and said flowable reaction mixture II.2 is produced at an isocyanate index of 75 to 95.

8. Method according to any of Claims 1 to 7, **characterized in that** component B contains one or more aromatic polyisocyanates.

9. Method according to any of Claims 1 to 8, **characterized in that** said flowable reaction mixture I contains by way of component B at least one compound selected from the group consisting of 4,4'-, 2,4'- and 2,2'-diphenylmethane diisocyanate and polyphenyl polymethylene polyisocyanate ("polynuclear MDI"), and also mixtures thereof.

10. Method according to any of Claims 1 to 9, **characterized in that** said flowable reaction mixture I gives rise to a viscoelastic foam having a DIN EN ISO 3386-1-98 compression load deflection of 2.0 to 4.0 kPa.

11. Molded flexible polyurethane foams obtainable by the method according to any of Claims 1 to 10.

12. Flexible polyurethane moldings obtainable by the method according to any of Claims 1 to 10.

13. Use of molded flexible polyurethane foams according to Claim 11 in the manufacture of furniture cushioning, textile inserts, mattresses, automotive seats and headrests.

**Revendications**

1. Procédé de fabrication de mousses moulées souples de polyuréthane (PUR) présentant des zones agencées horizontalement de dureté différente, **caractérisé en ce que**, lors de l'étape

   1) un mélange réactionnel fluide I est introduit dans le corps creux de moulage et moussé librement,
   2) 1 à 6 minutes après l'introduction du mélange réactionnel I dans le corps creux de moulage, au moins un mélange réactionnel fluide II est introduit dans le corps creux de moulage,
   3) un durcissement a lieu dans le moule et
   4) un démoulage de la mousse moulée souple de PUR formée selon l'étape 4 a lieu,
   le mélange réactionnel fluide I formant une mousse souple de PUR qui présente une densité brute de 30 à 90 kg/m$^3$, et le mélange réactionnel fluide II formant une mousse moulée souple de PUR qui présente une densité brute de 30 à 85 kg/m$^3$, un mélange réactionnel I qui contient les composants suivants étant utilisé à l'étape 1 :

   composant I-A1

   I-A1.1 au moins un polyéther-polyol ayant une fonctionnalité de 2 à 8, un indice hydroxyle (OH) selon DIN 53240 dans une plage allant de 20 à 70 mg de KOH/g et une teneur en polyoxypropylène (PO) en une quantité de 50 à 100 % en poids et une teneur en polyoxyéthylène (EO) en une quantité de 0 à 50 % en poids,
   I-A1.2 éventuellement au moins un polyéther-polyol ayant une fonctionnalité hydroxyle de 2 à 8, un indice OH selon DIN 53240 dans une plage allant de 50 à 65 mg de KOH/g et une teneur en PO en une quantité de 45 à 55 % en poids et une teneur en EO en une quantité de 45 à 55 % en poids ;
   I-A1.3 éventuellement au moins une dispersion d'un polymère dans un polyéther-polyol, l'indice OH selon DIN 53240 de la dispersion se situant dans une plage allant de 10 à 30 mg de KOH/g, et le polyéther-polyol présentant une fonctionnalité hydroxyle de 2 à 6, une teneur en PO en une quantité de 70 à 90 % en poids et une teneur en EO en une quantité de 10 à 30 % en poids ;
   I-A1.4 éventuellement au moins un polyéther-polyol ayant une fonctionnalité de 2 à 8, un indice OH dans une plage allant de 220 à 290 mg de KOH/g et une teneur en PO en une quantité de jusqu'à 25 % en poids et une teneur en EO en une quantité d'au moins 75 % en poids ;

   A2 de l'eau et/ou un agent gonflant physique,
   A3 éventuellement des composés comprenant des atomes d'hydrogène réactifs avec les isocyanates ayant un indice OH de 140 mg de KOH/g à 900 mg de KOH/g,
   A4 des adjuvants et des additifs, tels que

   a) des catalyseurs,
   b) des additifs tensioactifs,
   c) des pigments ou des agents ignifuges, et

B des di- et/ou polyisocyanates,
la fabrication ayant lieu à un indice caractéristique de 70 à 130.

2. Procédé selon la revendication 1, **caractérisé en ce que** le mélange réactionnel I contient le composant I-A1.1 en une quantité de 10 à 100 parties en poids ; le composant I-A1.2 en une quantité de 0 à 70 parties en poids ; le composant I-A1.3 en une quantité de 0 à 40 parties en poids ; le composant I-A1.4 en une quantité de 0 à 25 parties en poids ; le composant A2 en une quantité de 0,5 à 25 parties en poids ; le composant A3 en une quantité de 0 à 10 parties en poids ; le composant A4 en une quantité de 0,05 à 10 parties en poids, la somme des proportions en masse des composants I-A1.1 à I-A1.4 étant de 100, et les parties en poids des composants A2 à A4 se rapportant à la somme du composant I-A1.

3. Procédé selon la revendication 1, **caractérisé en ce que** le mélange réactionnel I contient le composant I-A1.1 en une quantité de 10 à 40 parties en poids ; le composant I-A1.2 en une quantité de 30 à 70 parties en poids ; le composant I-A1.3 en une quantité de 5 à 40 parties en poids et le composant I-A1.4 en une quantité de 5 à 25 parties en poids, le composant A2 en une quantité de 0,5 à 25 parties en poids ; le composant A3 en une quantité de 0 à 10 parties en poids ; le composant A4 en une quantité de 0,05 à 10 parties en poids, la somme des proportions en masse des composants I-A1.1 à I-A1.4 étant de 100, et les parties en poids des composants A2 à A4 se rapportant à la somme du composant I-A1.

4. Procédé selon l'une quelconque des revendications 1 à 3, **caractérisé en ce qu'**à l'étape 2, un mélange réactionnel II contenant les composants

   composant II-A1

   II-A1.1 au moins un polyéther-polyol ayant une fonctionnalité de 2 à 8, une teneur en polyoxyéthylène (EO) de 0 à 30 % en poids, un indice OH selon DIN 53240 de $\geq$ 10 mg de KOH/g à $\leq$ 112 mg de KOH/g,
   II-A1.2 éventuellement au moins un polyéther-polyol ayant une fonctionnalité de 2 à 8, une teneur en polyoxyéthylène (EO) > 60 % en poids, un indice OH selon DIN 53240 de $\geq$ 10 mg de KOH/g à $\leq$ 112 mg de KOH/g,
   II-A1.3 éventuellement au moins une dispersion d'un polymère dans un polyéther-polyol, l'indice OH selon DIN 53240 de la dispersion se situant dans une plage allant de 10 à 60 mg de KOH/g et le polyéther-polyol ayant une fonctionnalité hydroxyle de 2 à 6, une teneur en polyoxypropylène (PO) en une quantité de 70 à 90 % en poids et une teneur en EO en une quantité de 10 à 30 % en poids ;

   A2 de l'eau et/ou des agents gonflants physiques,
   A3 éventuellement des composés comprenant des atomes d'hydrogène réactifs avec les isocyanates ayant un indice OH de 140 mg de KOH/g à 900 mg de KOH/g,
   A4 éventuellement des adjuvants et des additifs, tels que

   a) des catalyseurs,
   b) des additifs tensioactifs,
   c) des pigments ou des agents ignifuges, et

   B) des di- ou polyisocyanates,
   la fabrication de la mousse souple de polyuréthane ayant lieu à un indice caractéristique de 75 à 120.

5. Procédé selon la revendication 4, **caractérisé en ce que** le composant II-A1.1 est contenu en une quantité de 10 à 100 parties en poids ; le composant II-A1.2 en une quantité de 0 à 10 parties en poids, et le composant II-A1.3 en une quantité de 0 à 90 parties en poids ; le composant A2 en une quantité de 0,5 à 25 parties en poids ; le composant A3 de 0 à 10 parties en poids ; le composant A4 en une quantité de 0,05 à 10 parties en poids, la somme des parties en poids de II-A1.1 à II-A1.3 étant de 100, et les parties en poids des composants A2 à A4 se rapportant à la somme du composant II-A1.

6. Procédé selon l'une quelconque des revendications 1 à 5, **caractérisé en ce qu'**à l'étape 2, plusieurs mélanges réactionnels II sont introduits successivement dans le corps creux de moulage, ces mélanges réactionnels II différant par leur dureté sous compression, déterminée selon DIN EN ISO 3386-1-98, après la formation de la mousse souple de PUR, et au moins un de ces mélanges réactionnels II étant agencé selon un agencement horizontal par rapport à la mousse souple de PUR moussée librement à l'étape 1).

**7.** Procédé selon l'une quelconque des revendications 1 à 6, **caractérisé en ce qu'**à l'étape 2, les mélanges réactionnels fluides II.1 et II.2 sont utilisés, ces mélanges réactionnels fluides II.1 et II.2 présentant la même composition et le mélange réactionnel fluide II.1 étant fabriqué à un indice caractéristique de 95 à 120 et le mélange réactionnel fluide II.2 étant fabriqué à un indice caractéristique de 75 à 95.

**8.** Procédé selon l'une quelconque des revendications 1 à 7, **caractérisé en ce que** le composant B contient un ou plusieurs polyisocyanates aromatiques.

**9.** Procédé selon l'une quelconque des revendications 1 à 8, **caractérisé en ce que** le mélange réactionnel fluide I contient en tant que composant B au moins un composé choisi dans le groupe constitué par le diisocyanate de 4,4'-, 2,4'- et 2,2'-diphénylméthane et le polyisocyanate de polyphénylpolyméthylène (« MDI polynucléaire »), ainsi que leurs mélanges.

**10.** Procédé selon l'une quelconque des revendications 1 à 9, **caractérisé en ce que** le mélange réactionnel fluide I forme une mousse viscoélastique ayant une dureté sous compression selon DIN EN ISO 3386-1-98 de 2,0 à 4,0 kPa.

**11.** Mousses moulées souples de polyuréthane pouvant être obtenues par le procédé selon l'une quelconque des revendications 1 à 10.

**12.** Pièces moulées souples en polyuréthane pouvant être obtenues par le procédé selon l'une quelconque des revendications 1 à 10.

**13.** Utilisation des mousses moulées souples de polyuréthane selon la revendication 11 pour la fabrication de rembourrages de meubles, de garnitures textiles, de matelas, de sièges automobiles et d'appuie-tête.

**Abbildung 1**

**Vergleich eines geschichteten Dualhardness Schaum mit einem reinen MDI-HR Schaumtyp**

Abbildung 2:

**Abbildung 3**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10016350 A
- US 6787078 B
- EP 342352 A
- EP 0370750 A
- US 6419863 B
- EP 355000 A
- EP 2046861 A
- DE 1111394
- DE 1222669
- DE 1152536
- DE 1152537
- US 3304273 A
- US 3383351 A
- US 3523093 A
- GB 1040452 A
- GB 987618 A
- US 4089835 A
- US 4260530 A
- EP 0007502 A
- EP 0000389 A
- EP 0176013 A

**In der Beschreibung aufgeführte Nicht-Patentliteratur**

- Kunststoff-Handbuch. Carl-Hanser-Verlag, 1993, vol. VII, 104-127
- **VON W. SIEFKEN.** Justus Liebigs Annalen der Chemie. vol. 562, 75-136